# EUROPÄISCHE PATENTSCHRIFT

(11) **EP 2 980 530 B1**
(45) Veröffentlichungstag und Bekanntmachung des Hinweises auf die Patenterteilung: **25.10.2017**
(21) Anmeldenummer: 15179300.7
(22) Anmeldetag: 31.07.2015
(51) Int. Cl.: G01C 21/26, G08G 1/0967

(54) **VERFAHREN ZUM BETREIBEN EINER MIT EINEM FAHRZEUG VERBUNDENEN NAVIGATIONSEINRICHTUNG UND NAVIGATIONSEINRICHTUNG ZUM AUSFÜHREN DES VERFAHRENS**
METHOD FOR OPERATING A NAVIGATION DEVICE CONNECTED TO A VEHICLE AND NAVIGATION DEVICE FOR CARRYING OUT THE METHOD
PROCÉDÉ DE FONCTIONNEMENT D'UN DISPOSITIF DE NAVIGATION RELIÉ À UN VEHICULE ET DISPOSITIF DE NAVIGATION DESTINÉ À EXECUTER LE PROCÉDÉ

(30) Priorität: 01.08.2014 DE 102014011248
(43) Veröffentlichungstag der Anmeldung: 03.02.2016
(73) Patentinhaber: Preh Car Connect GmbH, 01156 Dresden (DE)
(72) Erfinder: Kolanko, Dipl.-Inform. (FH) Jan, 01157 Dresden (DE)

(56) Entgegenhaltungen:
- EP-A1- 1 071 926
- DE-C1- 19 813 782
- US-A1- 2007 182 248
- US-A1- 2009 030 610
- US-A1- 2009 319 179

## Beschreibung

Die Erfindung betrifft ein Verfahren zum Betreiben einer mit einem Fahrzeug verbundenen Navigationseinrichtung und eine Navigationseinrichtung zum Ausführen des Verfahrens.

Herkömmliche Navigationseinrichtungen helfen einem Nutzer bei der Wegfindung zu einem gewünschten Ziel. Es ist bekannt, dass Navigationseinrichtungen unter Verwendung von historischen oder aktuellen Daten Routen berechnen und gegebenenfalls eine darauf basierende Zielführung durchführen, oder eine zuletzt gestartete und noch nicht beendete Zielführung fortsetzen.

Fahrzeuge können Kraftfahrzeuge mit und ohne Verbrennungsmotor sein, wie Personenkraftwagen oder Lastkraftwagen, Motorräder, Fahrräder, aber auch schienengebundene Fahrzeuge, wie Lokomotiven, wassergebundene Fahrzeuge, wie Boote und Schiffe, sowie luftfahrttaugliche Fahrzeuge, wie Gleitschirme, Motorflieger und Flugzeuge.

Unter einer Navigationseinrichtung kann eine Vorrichtung verstanden werden, die einem Nutzer Informationen über eine Position eines Fahrzeugs, mit welchem die Navigationseinrichtung verbunden ist, bereitstellt. Ferner kann unter einer Navigationseinrichtung eine Vorrichtung verstanden werden, mittels derer ein Nutzer eine Route, zum Beispiel von einem ersten Ort zu einem weiteren Ort, berechnen lassen und eine Zielführung ausgeben lassen kann.

Eine Navigationseinrichtung kann mit einem Fahrzeug derart verbunden sein, dass die Navigationseinrichtung in oder an dem Fahrzeug fest angebracht ist, zum Beispiel am Fahrzeug angebaut ist oder im Fahrzeug eingebaut ist. Alternativ dazu kann eine Navigationseinrichtung einfach von einem Fahrzeug abnehmbar sein oder einfach aus dem Fahrzeuginneren entnehmbar sein, beispielsweise als tragbares Gerät. Ferner kann eine Navigationseinrichtung neben mechanischen Schnittstellen auch unter Verwendung elektronischer Schnittstellen mit einem Fahrzeug verbunden sein. Die Schnittstellen können kabelgebunden oder drahtlos sein, zum Beispiel in Form von Bluetooth-Schnittstellen oder WLAN (wireless area network)-Schnittstellen. Über eine solche Schnittstelle kann eine Navigationseinrichtung Fahrzeugdaten empfangen, zum Beispiel Radumdrehungszahlen oder Gierraten.

Eine herkömmliche Navigationseinrichtung kann unter Verwendung von Landkartendaten eine Route berechnen, welche von einer Position der Navigationseinrichtung zu einer Zielposition führt. Die Position der Navigationseinrichtung wird meist unter Verwendung eines Satellitennavigationssystems bestimmt, zum Beispiel unter Verwendung von GPS, GLONASS, COMPASS oder GALILEO. Dazu empfängt die Navigationseinrichtung mit Hilfe einer Satellitenantenne die Signale mehrerer geostationärer Satelliten und wertet diese Signale aus. Die Zielposition wird in der Regel aus einem Ziel bestimmt, das ein Nutzer unter Verwendung einer Eingabeeinheit in die Navigationseinrichtung eingibt.

Die Route kann mittels einer Recheneinheit der Navigationseinrichtung berechnet werden, welche einen Routenberechnungsalgorithmus ausführt. Bei der Routenberechnung werden Landkartendaten verwendet, welche Objekte und den Objekten zugeordnete Informationen repräsentieren, zum Beispiel Straßen, Wege, Plätze, Eisenbahnlinien, Flüsse, Gebäude, Brücken, Geländeformen, Landesgrenzen, Parkmöglichkeiten, Raststätten, Verkehrsregelungen, Ortschaften und Geschwindigkeitsbegrenzungen. Die Landkartendaten sind in der Regel in einer nichtflüchtigen Speichereinheit der Navigationseinrichtung abgelegt, beispielsweise auf einer CD-ROM, auf einer Festplatte oder in einem Flash-Speicher.

Die berechnete Route oder ein Abschnitt der berechneten Route kann auf einer der Navigationseinrichtung zugeordneten Ausgabeeinheit, zum Beispiel einem Bildschirm, angezeigt werden. Dadurch kann der Nutzer der Navigationseinrichtung eine räumliche Vorstellung von der Route oder von einem vor ihm liegenden Routenabschnitt entwickeln, was ihm zum Beispiel ermöglicht, Fahrmanöver vorausschauend zu planen.

Ferner kann nach der Routenberechnung eine Zielführung gestartet werden. Als Zielführung wird ein Prozess bezeichnet, der einen Nutzer der Navigationseinrichtung entlang der berechneten Route leitet. Während der Zielführung kann die Navigationseinrichtung optische und akustische Fahranweisungen an den Nutzer ausgeben, die anhand der Route und der aktuellen Position der Navigationseinrichtung generiert werden.

Sowohl die Routenberechnung als auch die Zielführung werden im Folgenden als Navigationsvorgang bezeichnet.

Der Nutzer erwartet, dass eine Navigationseinrichtung bei Bedarf kurzfristig einsatzbereit ist. Daher soll das Initialisieren bzw. Starten einer Navigationseinrichtung wenig Zeit benötigen. Die immer komplexer werdenden Funktionsumfänge von Navigationseinrichtungen führen jedoch dazu, dass gegenwärtig auch mit aktueller Hardware ein hoher Zeitbedarf für das Initialisieren besteht, da bei der gleichzeitigen Ausführung von verschiedenen Aufgaben und Prozessen Performanceengpässe auftreten.

Herkömmliche Navigationseinrichtungen weisen das Problem auf, dass beim Starten eines Navigationsvorganges durch den Nutzer unter Umständen nicht alle zur Initialisierung gehörenden Aufgaben und Prozesse erledigt bzw. ausgeführt wurden. Die Navigationseinrichtung hat zum Beispiel zum Zeitpunkt des Starts des Navigationsvorgangs durch den Nutzer noch keine aktuellen Daten zu Verkehr und Wetter empfangen, da die dafür zuständigen Datendienste noch nicht oder noch nicht vollständig geladen sind oder die Übertragung der Daten noch nicht abgeschlossen ist. Das führt dazu, dass der Navigationsvorgang zu Fahrtantritt auf veralteten und somit gegebenenfalls nicht mehr zutreffenden Daten beruht. Unter einem Datendienst kann eine Softwareanwendung und/oder ein Ausführungsprogramm verstanden werden, die bzw. das in der Recheneinheit einer Navigationseinrichtung abläuft, bestimmte Funktionsmodule anspricht bzw. steuert und das Empfangen und Verarbeiten von Daten steuert.

Bekannt sind außerdem Navigationseinrichtungen, welche permanent oder über einen längeren Zeitraum Daten empfangen. Diesen Lösungen ist gemein, dass die zum Empfang benötigten Funktionsmodule dauerhaft in Betrieb sind und daher fortlaufend mit elektrischer Energie versorgt werden müssen. Diese Energie wird meist einer Batterie, zum Beispiel einer Fahrzeugbatterie, entzogen, womit die Gefahr besteht, dass die in der Batterie verbleibende elektrische Energie nicht mehr für weitere Funktionen, zum Beispiel zum Starten des Fahrzeugs, ausreicht.

EP 1071 926 A1 offenbart ein Fahrzeugnavigationssystem mit einem Fahreranwesenheitssensor und einer Fahrzeugmotorbetrieb-Detektionsschaltung, das in der Lage ist, sich bei erkannter Anwesenheit eines Fahrers einzuschalten und sich, wenn mittels der Detektionsschaltung innerhalb eines vorgegebenen Zeitraums keine Inbetriebnahme des Fahrzeugmotors detektiert wird, wieder auszuschalten.

Die Aufgabe der Erfindung besteht folglich darin, die vorgenannten Probleme zu lösen und ein energieeffizientes Verfahren zum Betreiben einer mit einem Fahrzeug verbundenen Navigationseinrichtung bereitzustellen, bei dem alle für einen Navigationsvorgang relevanten Daten zum Zeitpunkt des Starts des Navigationsvorganges in aktueller Form vorliegen.

Diese Aufgabe wird mit dem erfindungsgemäßen Verfahren zum Betreiben einer mit einem Fahrzeug verbundenen Navigationseinrichtung gelöst, gemäß Anspruch 1, welche einen Lichtsensor, eine Recheneinheit, eine Speichereinheit, eine Schnittstelleneinheit und eine Empfangseinheit aufweist.

Das erfindungsgemäße Verfahren weist die folgenden Schritte auf: Detektieren eines Helligkeitsanstiegs in der Umgebung des Fahrzeugs unter Verwendung des Lichtsensors; Vergleichen des detektierten Helligkeitsanstiegs mit einem vorgegebenen Helligkeitsanstieg unter Verwendung der Recheneinheit, und, wenn der detektierte Helligkeitsanstieg den vorgegebenen Helligkeitsanstieg überschreitet, Aktivieren der Empfangseinheit unter Verwendung der Recheneinheit, so dass die Empfangseinheit Daten von außerhalb des Fahrzeugs und der Navigationseinrichtung empfängt; und Speichern der Daten in der Speichereinheit.

Gemäß dem vorgestellten Verfahren verfügt die Navigationseinrichtung über einen Lichtsensor. Damit kann unter Zuhilfenahme der Recheneinheit ein Helligkeitsanstieg detektiert werden. Ein Helligkeitsanstieg kann auftreten, wenn ein Nutzer eine Garage öffnet, in der das Fahrzeug abgestellt ist. Dazu wird zu einem gewissen Zeitpunkt eine Lichtstärke in der Umgebung des Fahrzeugs bestimmt, d.h. gemessen. Aus dem gemessenen Lichtstärkewert und einem ausgewählten Bezugslichtstärkewert, der in der Vergangenheit bestimmt wurde, wird unter Zuhilfenahme der Recheneinheit ein Lichtstärkeanstieg bzw. Helligkeitsanstieg ermittelt. In der Annahme, dass diesem Helligkeitsanstieg eine Fahrzeugnutzung folgt, wenn der detektierte Helligkeitsanstieg signifikant ist, prüft die Recheneinheit, ob die gemessene Lichtstärke signifikant ist, um den detektierten Helligkeitsanstieg zu belegen. Ist neben dem detektierten Helligkeitsanstieg auch der gemessene Lichtstärkewert signifikant, aktiviert die Recheneinheit die Empfangseinheit, so dass noch vor dem Starten des Fahrzeugs eine Berechnung der Route unter Einbeziehung aktueller Daten möglich ist.

Die Aufgabe wird außerdem mit einer Navigationseinrichtung gemäß Anspruch 10 gelöst, welche mit einem Fahrzeug verbunden ist und folgende Bestandteile aufweist: einen Lichtsensor, der zum Detektieren eines Helligkeitsanstiegs in der Umgebung des Fahrzeugs eingerichtet ist; eine Empfangseinheit, die zum Empfangen von Daten von außerhalb des Fahrzeugs und der Navigationseinrichtung eingerichtet ist; eine Recheneinheit, die zum Vergleichen des detektierten Helligkeitsanstiegs mit einem vorgegebenen Helligkeitsanstieg und, wenn der detektierte Helligkeitsanstieg den vorgegebenen Helligkeitsanstieg überschreitet, Aktivieren der Empfangseinheit, so dass die Empfangseinheit Daten von außerhalb des Fahrzeugs und der Navigationseinrichtung empfängt, eingerichtet ist; und eine Speichereinheit, die zum Speichern der Daten eingerichtet ist.

Weitere Ausführungsformen der Erfindung sind in den abhängigen Patentansprüchen beschrieben.

Die Erfindung wird nun Bezug nehmend auf die folgenden Figuren näher erläutert.
Die Figuren 1 bis 3 zeigen jeweils ein Blockschema einer Navigationseinrichtung gemäß einer Ausführungsform der Erfindung.
Die Figuren 4A und 4B zeigen jeweils einen Lichtstärkeverlauf gemäß einer Ausführungsform des erfindungsgemäßen Verfahrens.
Die Figuren 5 und 6 zeigen jeweils ein Ablaufschema einer Ausführungsform des erfindungsgemäßen Verfahrens.

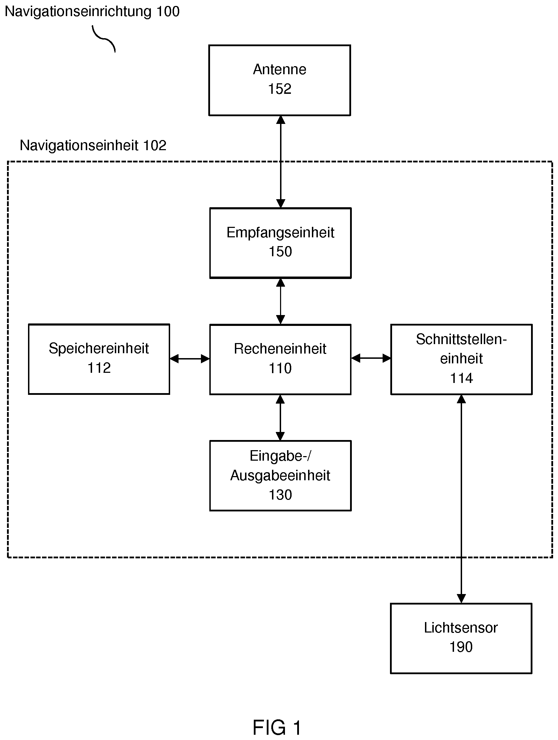

Im Folgenden wird auf Figur 1 Bezug genommen, welche ein Blockschema einer Navigationseinrichtung 100 gemäß einer Ausführungsform der Erfindung zeigt. Die Navigationseinrichtung 100 ist in ein Fahrzeug (nicht gezeigt) fest eingebaut.

Die Navigationseinrichtung 100 weist die folgenden Funktionsmodule auf: eine Navigationseinheit 102 mit einer Recheneinheit 110, einer Speichereinheit 112, einer Schnittstelleneinheit 114, einer Eingabe- und Ausgabeeinheit 130 und einer Empfangseinheit 150; eine Antenne 152; und einen Lichtsensor 190.

Der Lichtsensor 190 ist dazu eingerichtet, Licht in elektrische Signale umzuwandeln. Der Lichtsensor 190 kann unter Zuhilfenahme der Recheneinheit 110 einen Helligkeitsanstieg in der Umgebung des Fahrzeugs durch Messen der Lichtstärke des Lichts in der Umgebung des Fahrzeugs erfassen. Dazu bestimmt der Lichtsensor 190 zum Beispiel die Lichtstärke von sichtbarem Licht mit Wellenlängen von ungefähr 350 nm bis ungefähr 780 nm. Als Lichtsensor 190 kann eine Photozelle oder ein Halbleiterdetektor verwendet werden, zum Beispiel eine Photodiode oder eine Solarzelle.

Der Grundzustand des Lichtsensors 190 ist passiv. Zu bestimmten Messzeitpunkten oder Messzeitintervallen aktiviert die Recheneinheit 110 zur Abfrage einer Umgebungshelligkeit des Fahrzeugs den Lichtsensor 190. Aktivieren bedeutet, dass der Lichtsensor 190 mit elektrischer Energie versorgt wird und somit in der Lage ist, einen Lichtstärkewert einer Umgebungshelligkeit des Fahrzeugs zu messen. Der Lichtsensor 190 wird somit energieeffizient betrieben.

In einer alternativen Ausführungsform ist der Lichtsensor 190 permanent aktiv.

Der Lichtsensor 190 ist separat von der Navigationseinheit 102 positioniert. Mit anderen Worten ist der Lichtsensor 190 in dem Fahrzeug räumlich getrennt von der Navigationseinheit 102 angeordnet. Der Lichtsensor 190 detektiert eine Helligkeit in der Fahrzeugumgebung durch Messen einer Lichtstärke und leitet den Lichtstärkewert über eine mit der Recheneinheit 110 gekoppelte Schnittstelleneinheit 114 an die Recheneinheit 110 weiter.

In einer besonders vorteilhaften Ausführungsform der Erfindung ist der Lichtsensor 190 derart in oder an dem Fahrzeug positioniert, dass Umgebungslicht nahezu ungehindert auf den Lichtsensor 190 fällt. Beispielsweise ist der Lichtsensor 190 lediglich durch eine transparente Glas-oder Kunststoffscheibe von der Fahrzeugumgebung getrennt. Der Lichtsensor 190 kann neben dem erfindungsgemäßen Bestimmen eines Helligkeitsanstiegs auch für weitere Zwecke verwendet werden, beispielsweise zum automatischen Einschalten der Fahrzeugbeleuchtung oder zum automatischen Abblenden eines Innenraumspiegels.

In einer alternativen, nicht gezeigten Ausführungsform, welche nicht Gegenstand der Erfindung ist, ist der Lichtsensor in die Navigationseinheit integriert. Hierbei kann der Lichtsensor eine Helligkeit im Innenraum des Fahrzeugs detektieren und so auf eine Helligkeit in der Fahrzeugumgebung schließen. Der Lichtsensor kann neben dem Detektieren eines Helligkeitsanstiegs noch andere Aufgaben haben, beispielsweise das Messen der Lichtstärke von Licht, das auf die Eingabe- und Ausgabeeinheit der Navigationseinrichtung fällt, um die Helligkeit einer künstlichen Beleuchtung der Eingabe- und Ausgabeeinheit zu regulieren.

Die Recheneinheit 110 weist einen Prozessor oder mehrere Prozessoren mit einem Kern oder mehreren Kernen auf und ist dazu eingerichtet, Befehle und/oder Daten zu verarbeiten. Die Recheneinheit 110 kann den Ablauf des erfindungsgemäßen Verfahrens steuern und verschiedene Berechnungs- und Auswerteaufgaben erledigen, die noch erläutert werden. Die Recheneinheit 110 ist mit der Speichereinheit 112, der Eingabe- und Ausgabeeinheit 130, der Empfangseinheit 150 und dem Lichtsensor 190 gekoppelt. Die Recheneinheit 110 kann mittels der Schnittstelleneinheit 114 mit weiteren Funktionsmodulen (nicht gezeigt) verbunden sein, zum Beispiel über eine Busverbindung.

Die Empfangseinheit 150 sendet und empfängt Übertragungssignale, mit denen Daten übertragen werden. Die Daten bzw. Übertragungssignale können via physischen Leitungen und/oder Schnittstelleneinheiten ("kabelgebunden") übermittelt werden, wie zum Beispiel mittels einer Busverbindung. Alternativ dazu können die Daten bzw. Übertragungssignale unter Verwendung elektromagnetischer Wellen ("drahtlos") übertragen werden. Ferner können die Daten bzw. Übertragungssignale über ein Peer-to-Peer-Netz oder über eine Client-Server-Struktur übertragen werden. Außerdem ist die Empfangseinheit 150 zum Empfangen von Übertragungssignalen mit einer Antenne 152 gekoppelt.

Die Speichereinheit 112 kann eine oder mehrere Vorrichtungen zum nichtflüchtigen Speichern von Daten aufweisen, zum Beispiel Festplatten, Festwertspeicher (ROM, Read-Only-Memory) oder Flash-Speicher. Alternativ dazu kann die Speichereinheit 112 eine oder mehrere Vorrichtungen aus flüchtigen Speichern aufweisen, wie zum Beispiel Arbeitsspeicher und Caches. Die Speichereinheit 112 kann ferner eine oder mehrere Vorrichtungen aufweisen, welche jeweils eine Mischform aus einem nichtflüchtigen Speicher und einem flüchtigen Speicher darstellen, zum Beispiel Hybridfestplatten. Die Speichereinheit 112 weist eine oder mehrere Vorrichtungen auf, welche jeweils eine Kombination aus einer nichtflüchtigen Speichereinheit und einer flüchtigen Speichereinheit aufweisen. In der Speichereinheit 112 abgelegte Daten können mit einem Zeitstempel versehen sein, um mit weiteren Daten hinsichtlich ihrer Aktualität vergleichbar zu sein.

Die Schnittstelleneinheit 114 ist eingerichtet, zwischen der Recheneinheit 110 und externen, außerhalb der Navigationseinheit 102 angeordneten Funktionsmodulen, wie dem Lichtsensor 190, als Schnittstelle zu wirken, sowohl in physischer Hinsicht als auch die Datendienste und/oder weitere Anwendungen betreffend.

Die Erfindung stellt eine Navigationseinrichtung 100 bereit, die verschiedene Betriebsmodi aufweist. In einem ersten Betriebsmodus M1 ist die Navigationseinrichtung 100 ausgeschaltet. Der Betriebsmodus M1 liegt vor, wenn zum Beispiel lediglich noch eine geringe verbleibende elektrische Energie in der Fahrzeugbatterie vorhanden ist und Gefahr besteht, dass diese nicht mehr zum Starten des Fahrzeugs ausreichen kann. In einer Ausführungsform kann der Betriebsmodus M1 nicht nur auf die Fahrzeugbatterie, sondern generell auf eine die Navigationseinrichtung 100 versorgende Energiequelle bezogen sein. Ein zweiter Betriebsmodus M2 der Navigationseinrichtung 100 ist derart ausgestaltet, dass der Lichtsensor 190, die Recheneinheit 110, die Speichereinheit 112 und die Schnittstelleneinheit 114 mit elektrischer Energie versorgt werden, um Änderungen der Helligkeit zu detektieren und auszuwerten. Im Betriebsmodus M2 ist die Navigationseinrichtung 100 in einem Stand-by-Modus. In einem dritten Betriebsmodus M3 ist die Empfangseinheit 150 aktiviert, wobei die Navigationseinrichtung 100 in Abhängigkeit von der zur Verfügung stehenden elektrischen Energie neben der aktivierten Empfangseinheit 150 weitere aktivierte Funktionsmodule wie eine Positionsbestimmungseinheit (nicht gezeigt) aufweisen kann. Ein erweiterter dritter Betriebsmodus M3+ liegt vor, wenn neben der aktivierten Empfangseinheit 150 alle weiteren Funktionsmodule, zum Beispiel die Eingabe- und Ausgabeeinheit 130, aktiviert sind. Die Navigationseinrichtung 100 kann in Abhängigkeit von der zur Verfügung stehenden elektrischen Energie unter Zuhilfenahme der Recheneinheit 110 zwischen den genannten Betriebsmodi wechseln, um Energie zu sparen.

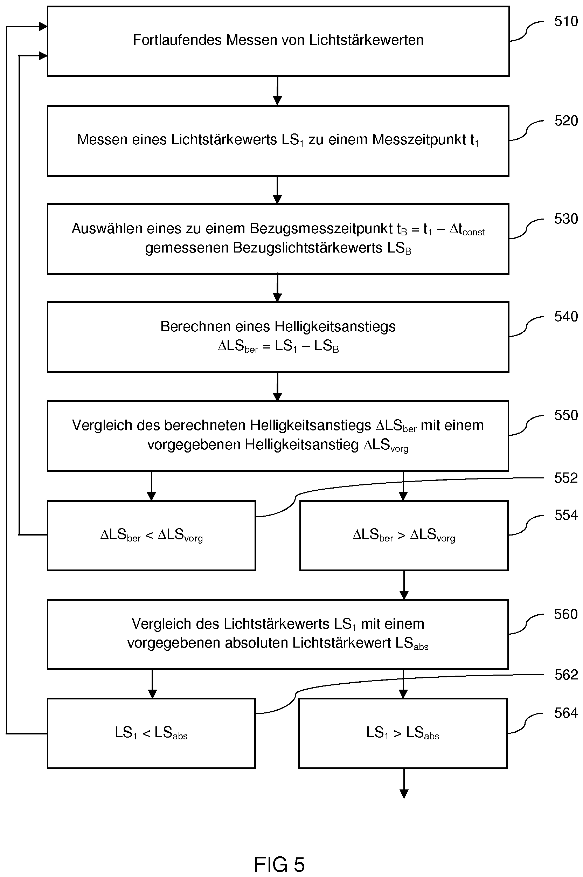

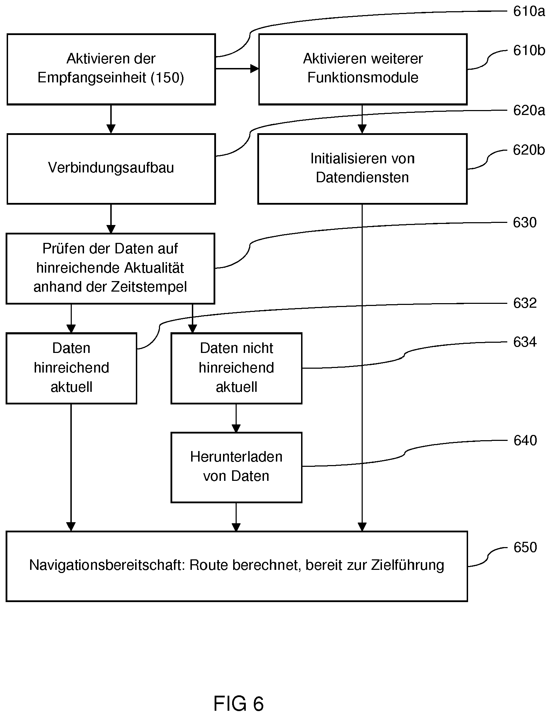

Im Folgenden wird eine beispielhafte Ausführungsform des erfindungsgemäßen Verfahrens unter Bezugnahme auf die Figuren 5 und 6 beschrieben.

Ein Fahrzeug ist in einer Garage geparkt. Unter dem Begriff Garage sind allgemein räumlich abgeschlossene Abstellmöglichkeiten für Fahrzeuge zu verstehen, wie zum Beispiel eine Einzelgarage, eine Tiefgarage mit mehreren Stellplätzen, ein Parkhaus mit mehreren Stellplätzen, aber auch geschlossene Wasserfahrzeuge, zum Beispiel eine Fähre, geschlossene landgebundene Fahrzeuge wie zum Beispiel Autotransporter oder Eisenbahnwaggons, oder geschlossene Luftfahrzeuge, wie zum Beispiel ein Transportflugzeug.

Wenn zu einem Zeitpunkt die Garage geöffnet wird, dadurch Licht in den Raum einfällt und demzufolge die Umgebung des Fahrzeugs heller wird, liegt ein Helligkeitsanstieg vor. Alternativ dazu kann ein Helligkeitsanstieg vorliegen, wenn in der Garage ein elektrisches Licht eingeschaltet wird. Der Helligkeitsanstieg vollzieht sich in einer gewissen zeitlichen Helligkeitsanstiegsdauer.

Die Recheneinheit 110 aktiviert zu bestimmten Messzeitpunkten den Lichtsensor 190, um einen Lichtstärkewert zu messen. Die bestimmten Messzeitpunkte, in denen die Recheneinheit 110 den Lichtsensor 190 aktiviert und in denen der Lichtsensor 190 Lichtstärkewerte erfasst, werden durch eine Zeitgebereinheit (nicht gezeigt) vorgegeben, wobei ein Messzeitabstand zwischen zwei aufeinander folgenden, d.h. zeitlich benachbarten Messzeitpunkten in der Speichereinheit 112 vorgegeben ist. Folglich wird das Messen der Lichtstärke fortlaufend durchgeführt. Der Messzeitabstand weist eine zeitliche Messzeitabstandsdauer von beispielweise 5 Sekunden auf, kann jedoch weniger, zum Beispiel 4, 3, 2 oder 1 Sekunde(n), oder mehr, zum Beispiel 7, 10, 15, 20, 30, 45, 60, 75, 90, 120 oder mehr Sekunden aufweisen. In einer Ausführungsform der Erfindung kann der Messzeitabstand aufeinander folgender Messzeitpunkte manuell eingestellt werden. Ferner kann der Messzeitabstand konstant sein oder variieren.

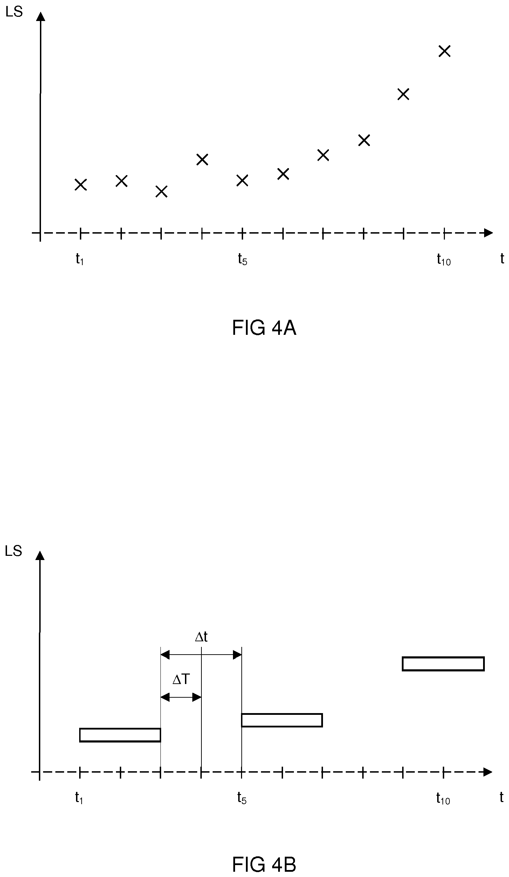

Wie in Teilschritt 510 gezeigt, wird die Lichtstärke einer Umgebungshelligkeit des Fahrzeugs fortlaufend zu bestimmten Messzeitpunkten gemessen, d.h. die Recheneinheit 110 fragt den Lichtsensor 190 fortlaufend zu bestimmten Messzeitpunkten ab, welchen Wert die Lichtstärke einer Umgebungshelligkeit des Fahrzeugs aufweist. Dazu versetzt die Recheneinheit 110 den Lichtsensor 190 fortlaufend zu bestimmten Messzeitpunkten in einen aktiven Zustand und erhält fortlaufend diskrete Lichtstärkewerte zu den jeweiligen Messzeitpunkten, wie in Figur 4A dargestellt ist.

In einer alternativen Ausführungsform der Erfindung wird die Lichtstärke einer Umgebungshelligkeit des Fahrzeugs fortlaufend über bestimmte Messzeitintervalle gemessen. Dazu versetzt die Recheneinheit den Lichtsensor fortlaufend über bestimmte Messzeitintervalle in einen aktiven Zustand und erhält fortlaufend eine Mehrzahl diskreter Lichtstärkewerte über das jeweilige Messzeitintervall, wie in Figur 4B dargestellt ist. Die Messzeitintervalle können konstant, d.h. von gleicher zeitlicher Messzeitdauer sein, oder in der zeitlichen Messzeitdauer variieren.

Wie in Teilschritt 520 gezeigt, misst der Lichtsensor 190 einen Lichtstärkewert LS₁ zu einem Messzeitpunkt t₁. Der Lichtstärkewert LS₁ wird unter Verwendung der Zeitgebereinheit und der Recheneinheit 110 mit einem Zeitstempel versehen und in der Speichereinheit 112 gespeichert. Der Zeitstempel weist Informationen zu Datum und Zeit auf, um den Lichtstärkewert LS₁ eindeutig zu bezeichnen.

Die Recheneinheit 110 wählt, wie in Teilschritt 530 gezeigt, aus der Speichereinheit 112 einen Bezugslichtstärkewert LS_{B} aus, welcher die Lichtstärke einer Umgebungshelligkeit des Fahrzeugs zu einem Bezugsmesszeitpunkt t_{B} angibt. Der Bezugsmesszeitpunkt t_{B} ist um einen Messzeitabstand Δt von dem Messzeitpunkt t₁ verschieden, mit anderen Worten liegt der Bezugslichtstärkewert LS_{B} aus einer vorigen Messung vor, d.h. der Bezugsmesszeitpunkt t_{B} ist älter als der Messzeitpunkt t₁. Der Bezugsmesszeitpunkt t_{B} und der Messzeitpunkt t₁ können zeitlich benachbart oder durch weitere Messzeitpunkte zeitlich voneinander getrennt sein. Der Messzeitabstand kann dem zeitlichen Abstand zwischen zwei Messzeitpunkten entsprechen (Δt = ΔT) oder der Messzeitabstand entspricht einem Produkt des zeitlichen Abstands zwischen zwei Messzeitpunkten mit einem Faktor k (Δt = k·ΔT, wobei k ein Element der rationalen Zahlen, größer als 0 und ungleich 1 ist).

Die Recheneinheit 110 berechnet aus dem Bezugslichtstärkewert LS_{B} und dem aktuell gemessenen Lichtstärkewert LS₁ einen Helligkeitsanstieg ΔLS_{ber} zwischen den Messzeitpunkten t_{B} und t₁, wie in Teilschritt 540 gezeigt.

Das Ergebnis, der Helligkeitsanstieg ΔLS_{ber}, wird anschließend wie in Teilschritt 550 gezeigt mit einem vorgegebenen Helligkeitsanstieg ALS_{vorg} verglichen, welcher in der Speichereinheit 112 als Schwellenwert für einen signifikanten Helligkeitsanstieg gespeichert ist. Die Recheneinheit 110 prüft somit, ob ein signifikanter Helligkeitsanstieg vorliegt.

Zeigt der Vergleich, dass der vorgegebene Helligkeitsanstieg ΔLS_{vorg} wie in Teilschritt 552 gezeigt größer ist als der aus LS_{B} und LS₁ berechnete Helligkeitsanstieg ΔLS_{ber}, liegt kein signifikanter Helligkeitsanstieg vor, der ein Aktivieren der Empfangseinheit 150 durch die Recheneinheit 110 begründet. In diesem Fall wird der Lichtstärkewert LS₁ in der Speichereinheit 112 zusammen mit dem entsprechend zugeordneten Zeitstempel abgespeichert und das Verfahren mit einem folgenden Lichtstärkewert der fortlaufenden Messung, zum Beispiel einem Lichtstärkewert LS₂ zum Messzeitpunkt t₂ sowie dem zugehörigen Bezugslichtstärkewert LS_{B+1} zum Bezugsmesszeitpunkt t_{B+1}, erneut ausgeführt, wobei Δt = t₁ - t_{B} = t₂ - t_{B+1} gilt.

Ein signifikanter Helligkeitsanstieg liegt vor, wenn wie in Teilschritt 554 der Helligkeitsanstieg ΔLS_{ber} größer ist als der vorgegebene Helligkeitsanstieg ΔLS_{vorg}, mit anderen Worten überschreitet der Helligkeitsanstieg ΔLS_{ber} den vorgegebenen Helligkeitsanstieg ΔLS_{vorg}.

In diesem Fall folgt, wie in Teilschritt 560 gezeigt, ein Vergleich des Lichtstärkewerts LS₁ mit einem vorgegebenen absoluten Lichtstärkewert LS_{abs}, welcher in der Speichereinheit 112 als Schwellenwert für eine signifikante Lichtstärke gespeichert ist. Dieser weitere Vergleich stellt eine Plausibilitätsprüfung dar, mit welcher der detektierte Helligkeitsanstieg ΔLS_{ber} zwischen einem Messzeitpunkt t₁ und einem Bezugsmesszeitpunkt t_{B} verifiziert wird, um irrtümliches Aktivieren der Empfangseinheit 150 zu vermeiden. So kann zum Beispiel im Messzeitpunkt t₁ das Scheinwerferlicht eines anderen Fahrzeugs auf den Lichtsensor 190 des abgestellten Fahrzeugs treffen und damit einen Helligkeitsanstieg gegenüber dem Bezugsmesszeitpunkt t_{B} bewirken. Der Helligkeitsanstieg kann, falls zum Bezugsmesszeitpunkt t_{B} die Umgebungshelligkeit des abgestellten Fahrzeugs hinreichend dunkel war, größer als der vorgegebene Helligkeitsanstieg ALS_{vorg} ausfallen und somit das Aktivieren der Empfangseinheit 150 auslösen. Zur Kontrolle und Korrektur solcher Situationen wird der Lichtstärkewert LS₁ mit dem absoluten Lichtstärkewert LS_{abs} verglichen, um festzustellen, ob nicht nur der Helligkeitsanstieg ΔLS_{ber} signifikant ist, sondern auch der gemessene Lichtstärkewert LS₁ signifikant ist.

Ergibt die Prüfung wie in Teilschritt 562, dass der absolute Lichtstärkewert LS_{abs} größer als der Lichtstärkewert LS₁ ist, liegt ein signifikanter Helligkeitsanstieg ΔLS_{ber} vor, bei dem die detektierte Helligkeit einen absoluten Lichtstärkewert LS_{abs} jedoch nicht überschreitet. Ein Aktivieren der Empfangseinheit 150 ist somit nicht begründet. Folglich wird der Lichtstärkewert LS₁ in der Speichereinheit 112 abgespeichert und das Verfahren wird mit einem folgenden Lichtstärkewert zu einem folgenden Messzeitpunkt der fortlaufenden Messung erneut ausgeführt.

Überschreitet, wie in Teilschritt 564 gezeigt, der Lichtstärkewert LS₁ den absoluten Lichtstärkewert LS_{abs}, so liegen ein signifikanter Helligkeitsanstieg ΔLS_{ber} und ein signifikanter gemessener Lichtstärkewert LS₁ vor. In diesem Fall wird die Empfangseinheit 150 durch die Recheneinheit 110 aktiviert.

In einer Ausführungsform der Erfindung kann zusätzlich oder anstelle der oben erläuterten Plausibilitätsprüfung ein Helligkeitsanstieg wie folgt verifiziert werden: neben dem Lichtstärkewert LS₁ wird ein Lichtstärkewert LS₂ zu einem Messzeitpunkt t₂ gemessen, wobei t₂ = t₁ + Δt gilt. Wenn sowohl ΔLS_{ber} = LS₁ - LS_{B} und ALS_{ber+1} = LS₂ - LS_{B+1} einen Helligkeitsanstieg ergeben und sowohl ΔLS_{ber} und ΔLS_{ber+1} größer als ALS_{vorg} sind, d.h. zwei aufeinander folgende signifikante Helligkeitsanstiege vorliegen, kann die Recheneinheit die Empfangseinheit aktivieren.

In einer alternativen Ausführungsform der Erfindung wird die Lichtstärke einer Helligkeit in der Umgebung des Fahrzeugs nicht punktuell zu definierten Messzeitpunkten, sondern über ein Messzeitintervall gemessen, wobei ein Messzeitintervall eine Mehrzahl diskreter Messzeitpunkte mit jeweils einem Lichtstärkewert aufweist. Die Recheneinheit bildet aus der Mehrzahl diskreter Lichtstärkewerte aus einem Messzeitintervall einen Mittelwert, zum Beispiel das arithmetische Mittel. Somit werden Ausreißer in den Lichtstärkewerten im Kontext benachbarter Lichtstärkewerte beurteilt. Analog zu dem oben erläuterten Verfahren wird anhand des aktuellen Lichtstärkemessmittelwerts des aktuellen Messzeitintervalls und eines gespeicherten Bezugslichtstärkemessmittelwerts eines Bezugsmesszeitintervalls ein Helligkeitsanstieg bestimmt, worauf ein Vergleich mit einem vorgegebenen Helligkeitsanstieg und gegebenenfalls ein Vergleich des aktuellen Lichtstärkemessmittelwerts mit einem absoluten Lichtstärkewert stattfinden.

In einer Ausführungsform ist der Zeitabstand zweier aufeinander folgender Messzeitpunkte gleich null, mit anderen Worten ist der Lichtsensor permanent aktiv und übermittelt ununterbrochen Lichtstärkewerte an die Recheneinheit.

Das Ausgestalten der Aktivität des Lichtsensors 190 beeinflusst den Energieverbrauch der Navigationseinrichtung 100. Während beim ununterbrochenen Messen der Lichtstärke einer Umgebungshelligkeit des Fahrzeugs der Lichtsensor 190 permanent aktiv ist und demzufolge ständig Energie verbraucht, ist der notwendige Energieeintrag beim Messen in Messzeitintervallen aufgrund der Messzeitabstände zwischen den einzelnen Messzeitintervallen verringert. Eine weitere Reduktion des Energieverbrauchs liegt vor, wenn die Lichtstärke lediglich zu bestimmten Messzeitpunkten gemessen wird, der Lichtsensor 190 demnach nur zu den bestimmten Messzeitpunkten aktiv ist. Der Messzeitabstand zwischen zwei Messzeitpunkten ist zweckmäßig so zu wählen, dass der Lichtsensor 190 möglichst energiesparend betrieben wird, eine Helligkeitsänderung jedoch zuverlässig detektiert wird.

In einer vorteilhaften Ausführungsform der Erfindung kann der gespeicherte, vorgegebene Helligkeitsanstieg ΔLS_{vorg} frei bzw. manuell einstellbar sein. In einer weiteren vorteilhaften Ausführungsform der Erfindung kann der gespeicherte, vorgegebene absolute Lichtstärkewert LS_{abs} frei bzw. manuell einstellbar sein. In einer besonders vorteilhaften Ausführungsform der Erfindung können der gespeicherte, vorgegebene Helligkeitsanstieg ΔLS_{vorg} und der gespeicherte, vorgegebene absolute Lichtstärkewert LS_{abs} frei bzw. manuell einstellbar sein. Somit hat der Nutzer die Möglichkeit, die Navigationseinrichtung 100 individuell nach seinen Vorlieben zu konfigurieren, ab welchem detektierten Helligkeitsanstieg bzw. welcher gemessenen Lichtstärke die Empfangseinheit 150 aktiviert werden soll.

In einer alternativen Ausführungsform der Erfindung kann der Lichtsensor das oben erläuterte Detektieren eines Helligkeitsanstiegs und Vergleichen des detektierten Helligkeitsanstiegs mit einem vorgegebenen Helligkeitsanstieg sowie Prüfen des detektierten Lichtstärkewerts mit einem vorgegebenen absoluten Lichtstärkewert zur Entlastung der Recheneinheit eigenständig durchführen. Zu diesem Zweck kann der Lichtsensor mit einer speziellen Hilfsrecheneinheit ausgestattet sein, welche in den Lichtsensor integriert oder außerhalb des Lichtsensors angeordnet ist. Der Lichtsensor bzw. die Hilfsrecheneinheit kann ein Meldesignal an die Recheneinheit senden, wenn der detektierte Helligkeitsanstieg den vorgegebenen Helligkeitsanstieg überschreitet und der gemessene Lichtstärkewert den vorgegebenen absoluten Lichtstärkewert überschreitet.

Wenn nicht der vorgegebene Helligkeitsanstieg ALS_{vorg} und der vorgegebene absolute Lichtstärkewert LS_{abs} überschritten werden, verbleibt die Navigationseinrichtung 100 einschließlich der Empfangseinheit 150 unverändert im gegenwärtigen Betriebszustand.

Wenn ein Überschreiten des vorgegebenen Helligkeitsanstiegs ALS_{vorg} und des vorgegebenen absoluten Lichtstärkewerts LS_{abs} festgestellt wird, aktiviert die Recheneinheit 110 unter der Annahme, dass sich ein Nutzer dem geparkten Fahrzeug nähert, wie in Teilschritt 610a gezeigt, die Empfangseinheit 150.

Das Aktivieren der Empfangseinheit 150 bewirkt das Aufbauen von Verbindungen zu einer und/oder einer Mehrzahl von Datenquellen, wie in Teilschritt 620a gezeigt.

Mit dem Verbindungsaufbau einher greift die Recheneinheit 110 auf die Speichereinheit 112 zu und prüft, wie in Teilschritt 630 gezeigt, ob bzw. in welcher Aktualität für den Navigationsvorgang benötigte gespeicherte Daten vorliegen, zum Beispiel Verkehrs- und Wetterdaten. Dazu weisen die in der Speichereinheit 112 gespeicherten Daten einen Zeitstempel auf, welcher eine Referenzzeit zum Zeitpunkt des Speicherns aufweist. Unter Zuhilfenahme der Zeitgebereinheit vergleicht die Recheneinheit 110 den Zeitpunkt des Speicherns mit der aktuellen Referenzzeit, die Recheneinheit 110 bestimmt mit anderen Worten das Alter der in der Speichereinheit 112 gespeicherten Daten. Liegen die gespeicherten Daten in hinreichender Aktualität vor, besteht keine Notwendigkeit für eine erneute Aktualisierung. Hinreichende Aktualität ist vorhanden, wenn eine Differenz zwischen dem Zeitpunkt des Speicherns der gespeicherten Daten, zum Beispiel Verkehrs- und Wetterdaten, und der aktuellen Referenzzeit kleiner ist als ein Aktualisierungszeitraum bzw. Aktualisierungszeitintervall einer entsprechenden Datenquelle, d.h. der Zeitraum oder das Zeitintervall, in dem eine neuere Version von Daten einer bestimmten Datenquelle veröffentlicht wird.

Zum Vergleich der gespeicherten Daten mit den aktuell verfügbaren Daten ruft die Empfangseinheit 150 Dateninformationen, zum Beispiel Datum, Version, Dateigröße, usw. von den jeweils verfügbaren Daten aus den entsprechenden Datenquellen ab. Die Dateninformationen werden mit den entsprechenden Dateninformationen der in der Speichereinheit 112 gespeicherten Daten unter Verwendung der Recheneinheit 110 verglichen.

In einer alternativen Ausführungsform der Erfindung sind der Aktualisierungszeitraum bzw. das Aktualisierungszeitintervall spezifisch für jede Datenquelle in der Speichereinheit hinterlegt. Ein Verbindungsaufbau zum Abrufen der Dateninformationen ist somit nicht notwendig, vielmehr kann der Verbindungsaufbau im Hintergrund ablaufen, während die gespeicherten Daten mittels der Recheneinheit und der Zeitgebereinheit auf Aktualität geprüft werden. Hinreichende Aktualität kann gegeben sein, wenn eine Differenz zwischen dem Zeitpunkt des Speicherns der gespeicherten Daten und der aktuellen Referenzzeit kleiner ist als 1 Sekunde, 5 Sekunden, 10 Sekunden, 15 Sekunden, 30 Sekunden, 45 Sekunden, 1 Minute, 2 Minuten, 3 Minuten, 5 Minuten, 7 Minuten oder 10 Minuten.

Ergibt die Prüfung, dass die gespeicherten Daten hinreichend aktuell sind, d.h. seitens der Datenquellen keine neueren Daten zur Verfügung stehen, so entfällt, wie in Teilschritt 632 gezeigt, das Abrufen und Herunterladen der aktuellen Daten zunächst und die Navigationseinrichtung 100 wird in einen Zustand bereit zur Routenberechnung und/oder Zielführung versetzt, wie in Teilschritt 650 gezeigt. Eine Aktualisierung der gespeicherten Daten kann zu einem späteren Zeitpunkt stattfinden, wenn unter Berücksichtigung der geprüften Zeitstempel der gespeicherten Daten und in der Speichereinheit 112 gespeicherten Angaben bezüglich Aktualisierungszeitraum bzw. Aktualisierungszeitintervall neuere Daten erwartet werden.

Optional kann der Aktualisierungszeitraum bzw. das Aktualisierungszeitintervall, nach welchem die gespeicherten Daten als hinreichend aktuell gelten, manuell eingestellt werden.

In einer alternativen Ausführungsform der Erfindung kann das oben erläuterte Prüfen der in der Speichereinheit gespeicherten Daten auf ihre Aktualität unterbleiben. In diesem Fall werden die für den Navigationsvorgang benötigten Daten stets heruntergeladen.

Ergibt die Prüfung, wie in Teilschritt 634, dass die in der Speichereinheit 112 gespeicherten Daten nicht in hinreichender Aktualität vorliegen, werden die für den Navigationsvorgang benötigten Daten empfangen bzw. heruntergeladen, zum Beispiel via Radiodatensystem (Radio Data System, RDS), Verkehrsnachrichtenkanal (Traffic Message Channel, TMC) oder Internet, wie in Teilschritt 640 gezeigt. Dabei können sich die herunterzuladenden Daten im Hinblick auf ihr Datenvolumen und ihre Datenübertragungsrate unterscheiden.

Wie in Teilschritt 610b gezeigt, aktiviert die Recheneinheit 110 neben der Empfangseinheit 150 weitere Funktionsmodule der Navigationseinrichtung 100, zum Beispiel die Eingabe- und Ausgabeeinheit 130 und/oder eine Positionsbestimmungseinheit. Das Aktivieren der weiteren Funktionsmodule weist das Starten wesentlicher Funktionsmodule der Navigationseinrichtung 100 auf. Der Start läuft in mehreren Stufen ab. Zunächst lädt die Recheneinheit 110 ein einfaches Startprogramm. Das einfache Startprogramm erlaubt das Laden eines komplexeren Startprogramms, mit welchem wiederum ein Betriebssystem geladen wird. Die Navigationseinrichtung 100 ist für einen Navigationsvorgang bereit, wenn das Betriebssystem initialisiert und die Datendienste geladen sind. Das Aktivieren der weiteren Funktionsmodule tritt parallel zum Aktivieren der Empfangseinheit 150 auf.

In einer Ausführungsform der Erfindung werden die weiteren Funktionsmodule erst nach der Empfangseinheit aktiviert.

In einer alternativen Ausführungsform der Erfindung wird lediglich die Empfangseinheit bzw. werden lediglich die zum Datenempfang benötigten Funktionsmodule aktiviert.

Dem Aktivieren der weiteren Funktionsmodule folgt weiterhin, wie in Teilschritt 620b gezeigt, das Initialisieren von Datendiensten, welche für den Betrieb der Navigationseinrichtung 100 bzw. der jeweiligen Funktionsmodule Daten bereitstellen, zum Beispiel das Laden einer Landkartendatenbank, das Verbinden mit einem satellitengestützten Positionsbestimmungssystem zur Detektion der Fahrzeugposition und das Abbilden der Position des Fahrzeugs in einer Landkarte.

In einer Ausführungsform der Erfindung kann das Aktivieren der weiteren Funktionsmodule und das Initialisieren von Datendiensten ferner das Herstellen von Datenverbindungen zu Fahrzeugmodulen aufweisen, zum Beispiel zu einer Fahrzeuggeschwindigkeitsmesseinheit, zu einer Batterieladestandsmesseinheit oder zu einer Kraftstofftankfüllstandsmesseinheit. Die Daten der Fahrzeugmodule können den Navigationsvorgang um weitere Informationen ergänzen, zum Beispiel um das Vorschlagen von Tankstellen entlang der berechneten Route, bis zu denen die verfügbare elektrische Energie bzw. der verfügbare Kraftstoff ausreicht.

Das Aktivieren der Empfangseinheit 150 bzw. weiterer Funktionsmodule auf Grundlage eines detektierten Helligkeitsanstiegs ermöglicht das Empfangen und Einbinden aktueller Daten für bzw. in einen Navigationsvorgang, so dass ein Nutzer bereits beim Start des Fahrzeugs und/oder unmittelbar nach einer Zieleingabe eine auf Basis aktueller Daten berechnete Route und/oder eine Zielführung erhält. Die berechnete Route wird auf einer Eingabe- und Ausgabeeinheit 130, zum Beispiel einen Bildschirm, ausgegeben.

In einer Ausführungsform der Erfindung kann das Verfahren die zu startenden Datendienste in der Reihenfolge ihrer Initialisierung staffeln und/oder optimieren und/oder priorisieren, um einem Nutzer die Navigationseinrichtung frühestmöglich für einen Navigationsvorgang bereitzustellen.

Allgemein kann das Verfahren schnell startende und/oder ressourcenschonende Datendienste und/oder Datendienste mit kleinem zu übertragenden Datenvolumen und hoher Datenübertragungsrate früher starten, während Datendienste mit höheren Leistungsanforderungen an die Hardware und/oder größerem zu übertragenden Datenvolumen und/oder schwächeren Sendern bzw. Sendern mit geringerer Datenübertragungsrate später gestartet werden. Mit anderen Worten kann die Reihenfolge, in der die Datendienste gestartet werden, automatisch unter Verwendung der Recheneinheit festgelegt werden, wobei das zu übertragende Datenvolumen und die verfügbare Datenübertragungsrate die Datenübertragungsdauer bestimmen. Die Reihenfolge kann in Abhängigkeit von der Dauer eines jeden Ladevorgangs für jeden zu startenden Datendienst, dem Ressourcenbedarf jedes einzelnen Datendiensts und/oder der Datenübertragungsdauer für die jeweils zu empfangenden Daten jedes einzelnen Datendiensts klassifiziert werden.

Für die Klassifizierung und einen quantitativen Vergleich kann ein Kennwert maßgeblich sein, wobei der Kennwert für jeden Datendienst spezifisch aus den Größen Ladezeit, Ressourcenverbrauch und Datenübertragungsdauer gebildet wird, zum Beispiel unter Verwendung der Recheneinheit.

Die zu startenden Datendienste können automatisch gestaffelt werden, so dass sie beim Start der Navigationseinrichtung in einer bestimmten Reihenfolge ihrer Kennwerte, zum Beispiel aufsteigend, initialisiert werden. Der am schnellsten startende Datendienst mit den minimalsten Hardwareanforderungen und der geringsten Datenübertragungsdauer wird mit anderen Worten zuerst gestartet, darauf der Datendienst mit dem nächstgrößeren Kennwert, usw.

Es ist jedoch üblich, dass zwischen den einzelnen Datendiensten Abhängigkeiten bestehen, die einseitig oder wechselseitig ausgeprägt sein können. Beispielweise ist ein erster Datendienst auf die Daten und/oder ein Ergebnis eines zweiten Datendienstes angewiesen. Sollte besagter zweiter Datendienst im Vergleich zu besagtem ersten Datendienst jedoch einen Kennwert aufweisen, gemäß dem der zweite Datendienst vor dem ersten Datendienst gestartet würde, können Probleme beim Start der Navigationseinrichtung auftreten. Daher können die zu startenden Datendienste hinsichtlich ihres Starts automatisch optimiert werden, zum Beispiel durch die Recheneinheit, so dass die Reihenfolge beim Start sich an dem jeweiligen Kennwert der Datendienste, zusätzlich aber auch an deren Beziehungen untereinander ausrichtet.

Die Erfindung stellt ein Verfahren bereit, gemäß dem eine Helligkeit in der Umgebung des Fahrzeugs mittels des Lichtsensors 190 fortlaufend gemessen wird. In der Recheneinheit 110 wird ein bestimmter gemessener Lichtstärkewert einer Helligkeit zu einem bestimmten Messzeitpunkt mit einem zuvor gemessenen Bezugslichtstärkewert einer Helligkeit zu einem Bezugsmesszeitpunkt verglichen, um einen Helligkeitsanstieg zu berechnen. Der berechnete Helligkeitsanstieg wird mit einem in der Speichereinheit 112 gespeicherten, vorgegebenen Helligkeitsanstieg verglichen. Ist der berechnete Helligkeitsanstieg größer als der vorgegebene Schwellenwert, wird in der Recheneinheit 110 die gemessene Lichtstärke der Helligkeit zu dem bestimmten Messzeitpunkt mit einem in der Speichereinheit 112 gespeicherten vorgegebenen absoluten Lichtstärkewert verglichen. Übersteigt die gemessene Lichtstärke der Helligkeit zu dem bestimmten Messzeitpunkt den vorgegebenen Schwellenwert, aktiviert die Recheneinheit 110 die Empfangseinheit 150 und gegebenenfalls weitere Funktionsmodule. Die Empfangseinheit 150 baut Verbindungen zu den Datenquellen auf, die die für den Navigationsvorgang benötigten Daten zu Verfügung stellen. Daraufhin prüft die Recheneinheit 110 unter Zuhilfenahme der Speichereinheit 112, ob die für den Navigationsvorgang gespeicherten Daten hinreichend aktuell sind. Zeigt die Prüfung, dass die gespeicherten Daten nicht hinreichend aktuell sind, werden die aktuellen Daten durch die Empfangseinheit 150 empfangen und zur Verfügung gestellt. Parallel zum Verbindungsaufbau werden die Datendienste zum Steuern der weiteren Funktionsmodule geladen. Sind die benötigten Datendienste geladen und liegen alle für den Navigationsvorgang benötigten Daten in aktueller Version vor, ist die Navigationseinrichtung 100 für einen Navigationsvorgang bereitgestellt.

Der Zeitraum zwischen dem Detektieren eines Helligkeitsanstiegs und einem Zustand der Navigationseinrichtung 100 zur Navigationsbereitschaft, d.h. sämtliche für einen Navigationsvorgang benötigten Datendienste sind gestartet und die aktuellen Daten liegen vor, beträgt weniger als 60 Sekunden, weniger als 50 Sekunden, weniger als 40 Sekunden, weniger als 30 Sekunden, weniger als 25 Sekunden, weniger als 20 Sekunden, weniger als 15 Sekunden, weniger als 10 Sekunden.

Sollte eine Inbetriebnahme des Fahrzeugs ausbleiben, wobei zum Beispiel das den Helligkeitsanstieg begründende Licht wieder erlöscht, da eine Person die Garage betrat, ohne dass das Fahrzeug in Betrieb genommen wurde, wird die Navigationseinrichtung 100 heruntergefahren, zum Beispiel in den Betriebsmodus M2. Dazu beginnt mit Aktivieren der Empfangseinheit 150 ein Inbetriebnahmezeitintervall, das unter Verwendung der Recheneinheit 110 und der Zeitgebereinheit über eine in der Speichereinheit 112 gespeicherte, vorgegebene zeitliche Wartedauer bis zu einem Endzeitpunkt läuft. Erfolgt innerhalb des Inbetriebnahmezeitintervalls kein Start des Fahrzeugs oder kein Starten eines Navigationsvorgangs, d.h. der Endzeitpunkt des Inbetriebnahmezeitintervalls wird erreicht, werden die empfangenen Daten mit Zeitstempel in der Speichereinheit 112 gespeichert, die gestarteten Datendienste beendet und die aktivierte Empfangseinheit 150 sowie die aktivierten weiteren Funktionseinheiten heruntergefahren. Bei einem erneuten Start der Empfangseinheit 150 bzw. der Navigationseinrichtung 100 müssen dann nur die gespeicherten Daten aktualisiert werden, die keine hinreichende Aktualität aufweisen. Dazu kann das Verfahren den zuvor beschriebenen Algorithmus erneut abarbeiten.

Das Inbetriebnahmezeitintervall kann eine vorgegebene zeitliche Wartedauer aufweisen, die in der Speichereinheit 112 gespeichert ist. Die Navigationseinrichtung 100 kann ferner vor Erreichen des Endzeitpunkts des Inbetriebnahmezeitintervalls heruntergefahren werden, wenn zum Beispiel nur noch eine geringe verbleibende elektrische Energie in der Fahrzeugbatterie vorhanden ist und Gefahr besteht, dass diese nicht mehr zum Starten des Fahrzeugs ausreichen kann. Ferner kann in einer Ausführungsform der Erfindung die zeitliche Wartedauer manuell einstellbar sein.

In einer Ausführungsform der Erfindung kann das Verfahren auch bei einem im Freien, zum Beispiel auf einen Außenstellplatz, geparkten Fahrzeug Anwendung finden. Hier können zum Beispiel das Einschalten einer Lampe mit Bewegungsmelder oder ein Sonnenaufgang am Morgen als Auslöser verwendet werden. Die Bedingungen für einen Einsatz im Freien können sich von denen für geschlossene Räume unterscheiden, zum Beispiel in geringeren Helligkeitsanstiegen; in nicht fortlaufend steigenden Helligkeitsanstiegen, zum Beispiel aufgrund von Wolken; einer jahreszeitlich variierenden Lichtstärke der Helligkeit; der Abhängigkeit der Lichtstärke der Helligkeit von einer Parkposition des Fahrzeugs, zum Beispiel unterschiedliche Lichtstärken unter freiem Himmel, unter Bäumen, unter einem Carport; usw. Das Verfahren kann für die Verwendung zum Detektieren eines Helligkeitsanstiegs im Freien angepasst werden, zum Beispiel mittels größerer Messzeitabstände zwischen den Messzeitpunkten, in verlängerten Messzeitintervallen und in angepassten vorgegebenen Schwellenwerten für den Helligkeitsanstieg und die absolute Lichtstärke.

Im Weiteren kann das Detektieren eines Helligkeitsanstiegs für ein im Freien abgestelltes Fahrzeug analog zu dem für geschlossene Räume beschriebenen Verfahren stattfinden.

In einer vorteilhaften Ausführungsform der Erfindung kann der Nutzer manuell einstellen, ob das Fahrzeug in einem geschlossenen Raum oder im Freien abgestellt ist, wodurch das Verfahren die entsprechend angepassten Messzeitabstände, Messzeitintervalle und Schwellenwerte auswählt. In einer besonders vorteilhaften Ausführungsform kann das Verfahren automatisch feststellen, ob das Fahrzeug in einem geschlossenen Raum oder im Freien abgestellt ist. Die automatische Feststellung kann derart ausgeführt sein, dass Informationen zu der räumlichen Umgebung des Fahrzeugs ermittelt werden, wobei die Informationen in Form entsprechender Daten aus Assistenzsystemen wie Kamera, Parkabstandssensoren, Abstandsregeltempomat oder Spurwechselassistent vorliegen können.

In einer nicht gezeigten Ausführungsform kann das Verfahren weitere Informationen einbinden, um das Aktivieren der Navigationseinrichtung auf Grundlage eines Helligkeitsanstiegs auf einen bestimmten Startzeitraum zu beschränken und diesen Startzeitraum zu prognostizieren. Mit anderen Worten kann ein Startzeitpunkt oder ein Startzeitraum bestimmt werden, ab bzw. in welchem der Lichtsensor die Lichtstärke einer Umgebungshelligkeit des Fahrzeugs misst. Die Prognose kann unter Zuhilfenahme von ausgewerteten historischen Daten, zum Beispiel Wochentag, übliche Startzeit an dem jeweiligen Wochentag und/oder übliche Zielführung erfolgen.

In einer weiteren, nicht gezeigten Ausführungsform der Erfindung kann die Recheneinheit 110 mehrere Rechenteileinheiten aufweisen, wobei jede der Rechenteileinheiten eine der Aufgaben der Recheneinheit 110 bearbeiten kann. Beispielsweise wertet eine Rechenteileinheit 110a die Messwerte des Lichtsensors aus, eine Rechenteileinheit 110b prüft die Daten in der Speichereinheit, eine Rechenteileinheit 110c aktiviert die Empfangseinheit und verarbeitet die empfangenen Daten, eine Rechenteileinheit 110d aktiviert die weiteren Funktionsmodule und/oder die Datendienste, eine Rechenteileinheit 110e steuert die Schnittstelleneinheit und eine Rechenteileinheit 110f kommuniziert mit der Eingabe- und Ausgabeeinheit. Die Rechenteileinheiten können zentral in der Navigationseinrichtung, zum Beispiel innerhalb der Navigationseinheit, dezentral in der Navigationseinrichtung und/oder teilweise oder vollständig außerhalb der Navigationseinrichtung, zum Beispiel in weiteren Funktionsmodulen oder Fahrzeugmodulen, angeordnet sein.

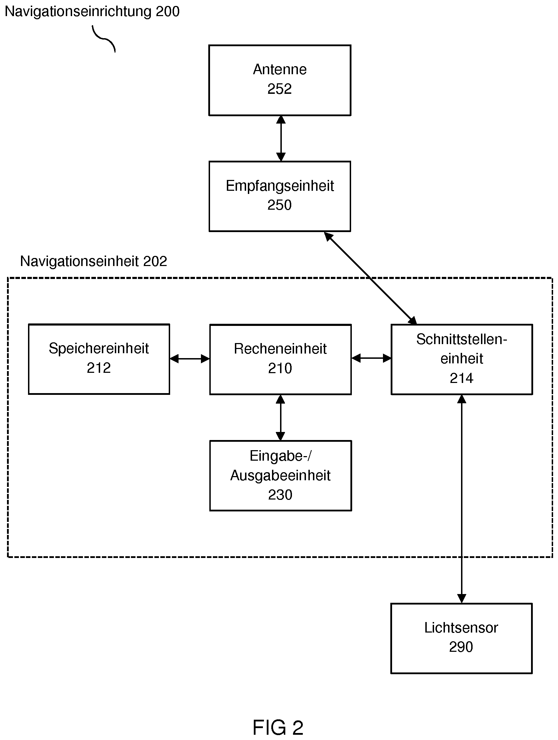

Eine weitere Ausführungsform der Erfindung ist in Figur 2 dargestellt, gemäß welcher eine Navigationseinrichtung 200 die folgenden Funktionsmodule aufweist: eine Navigationseinheit 202 mit einer Recheneinheit 210, einer Speichereinheit 212, einer Schnittstelleneinheit 214 und einer Eingabe- und Ausgabeeinheit 230; eine Empfangseinheit 250; eine Antenne 252 und einen Lichtsensor 290. Die Funktionsmodule der Navigationseinheit 202 sowie der Lichtsensor 290 entsprechen in Ausgestaltung und Funktion den äquivalent bezeichneten Funktionsmodulen der Navigationseinheit 102. Die Navigationseinrichtung 200 weist die extern, mit anderen Worten außerhalb der Navigationseinheit 202 ausgeführte Empfangseinheit 250 auf. Die externe Empfangseinheit 250, die mittels der Schnittstelleneinheit 214 mit der Recheneinheit 210 verbunden ist, kann zerstörungsfrei von der Navigationseinheit 202 getrennt werden, und vice versa. Die Navigationseinrichtung 200 kann eine nachrüstbare Navigationseinheit 202 sein, welche mit bereits vorhandenen Strukturen im Fahrzeug, zum Beispiel einer Empfangseinheit 250, verbunden wird.

In einer weiteren Ausführungsform, welche nicht Gegenstand der Erfindung ist, kann die Recheneinheit unabhängig von einer Navigationseinheit ausgeführt sein (nicht gezeigt). Die Navigationseinheit weist mit anderen Worten keine eigene Recheneinheit auf, sondern nutzt eine externe, zum Beispiel im Fahrzeug angeordnete Recheneinheit zum Abarbeiten und Steuern des erfindungsgemäßen Verfahrens.

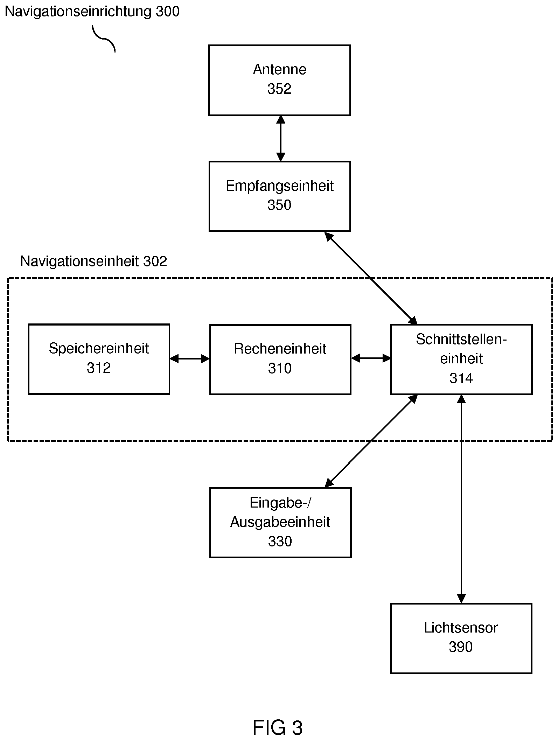

Eine weitere Ausführungsform der Erfindung ist in Figur 3 dargestellt, gemäß welcher eine Navigationseinrichtung 300 die folgenden Funktionsmodule aufweist: eine Navigationseinheit 302 mit einer Recheneinheit 310, einer Speichereinheit 312 und einer Schnittstelleneinheit 314; eine Eingabe- und Ausgabeeinheit 330; eine Empfangseinheit 350; eine Antenne 352 und einen Lichtsensor 390. Die Funktionsmodule der Navigationseinheit 302 sowie der Lichtsensor 390 entsprechen in Ausgestaltung und Funktion den äquivalent bezeichneten Funktionsmodulen der Navigationseinheit 102. Die Navigationseinrichtung 300 weist extern, mit anderen Worten außerhalb der Navigationseinheit 302 ausgeführt, die Eingabe- und Ausgabeeinheit 330 und die Empfangseinheit 350 auf. Eine Navigationseinrichtung 300 gemäß dieser Anordnung liegt vor, wenn ein Smartphone, ein Tablet, ein tragbarer Personal Computer oder eine vergleichbare Vorrichtung an die Navigationseinheit 302 angeschlossen wird. In diesem Fall können sowohl die Eingabe und Ausgabe über entsprechende Vorrichtungen an dem Smartphone erfolgen, wie auch das Empfangen von Daten darüber möglich ist. Ferner können weitere Funktionsmodule wie die Positionsbestimmungseinheit extern ausgeführt sein. Die externen Funktionsmodule können mit der Navigationseinheit 302, insbesondere der Recheneinheit 310, über die Schnittstelleneinheit 314 gekoppelt werden.

## Patentansprüche

1. Verfahren zum Betreiben einer mit einem Fahrzeug verbundenen Navigationseinrichtung (100), welche einen Lichtsensor (190), eine Empfangseinheit (150), eine Speichereinheit (112) und eine Recheneinheit (110) aufweist, mit den Schritten:
• Detektieren eines Helligkeitsanstiegs in der Umgebung des Fahrzeugs unter Verwendung des Lichtsensors (190);
• Vergleichen des detektierten Helligkeitsanstiegs mit einem vorgegebenen Helligkeitsanstieg unter Verwendung der Recheneinheit (110), und, wenn der detektierte Helligkeitsanstieg den vorgegebenen Helligkeitsanstieg überschreitet,
• Aktivieren der Empfangseinheit (150) unter Verwendung der Recheneinheit (110), so dass die Empfangseinheit (150) Daten von außerhalb des Fahrzeugs und der Navigationseinrichtung (100) empfängt; und
• Speichern der Daten in der Speichereinheit (112).

2. Verfahren gemäß Anspruch 1,
bei dem ein Lichtstärkewert bestimmt wird, der Lichtstärkewert mit einem vorgegebenen Lichtstärkeschwellenwert verglichen wird, die Empfangseinheit (150) aktiviert wird, wenn der Lichtstärkewert den Lichtstärkeschwellenwert überschreitet, und die Empfangseinheit (150) nicht aktiviert wird, wenn der Lichtstärkewert den Lichtstärkeschwellenwert nicht überschreitet.

3. Verfahren gemäß einem der Ansprüche 1 und 2,
bei dem der Helligkeitsanstieg als Differenz zwischen einem ersten Lichtstärkewert, der zu einem ersten Messzeitpunkt bestimmt wird, und einem Bezugslichtstärkewert, der zu einem Bezugsmesszeitpunkt bestimmt wurde, gebildet wird, wobei der Bezugsmesszeitpunkt zeitlich vor dem ersten Messzeitpunkt liegt.

4. Verfahren gemäß einem der vorhergehenden Ansprüche,
bei dem beim Aktivieren der Empfangseinheit (150) neben der Empfangseinheit (150) ein weiteres Funktionsmodul der Navigationseinrichtung (100) oder des Fahrzeugs aktiviert wird.

5. Verfahren gemäß Anspruch 4,
bei dem das Aktivieren des weiteren Funktionsmoduls das Initialisieren eines Datendienstes aufweist.

6. Verfahren gemäß Anspruch 5,
bei dem Datendienste in einer bestimmten Reihenfolge gestartet werden, welche mittels der Recheneinheit (110) in Abhängigkeit von der Dauer des Ladevorgangs jedes zu startenden Datendienstes, dem Ressourcenverbrauch jedes zu startenden Datendienstes und/oder einer erwarteten Datenübertragungsdauer jedes zu startenden Datendienstes, festgelegt wird.

7. Verfahren gemäß einem der vorhergehenden Ansprüche,
bei dem beim Speichern der Daten in der Speichereinheit (112) die Daten mit einem Zeitstempel versehen werden.

8. Verfahren gemäß einem der vorhergehenden Ansprüche,
bei dem die Speichereinheit (112) mit einem Zeitstempel versehene Daten aufweist, wobei unter Verwendung des Zeitstempels ein Alter der in der Speichereinheit (112) gespeicherten Daten bestimmt wird, das Alter mit einem vorgegebenen Aktualisierungszeitraum verglichen wird und, wenn das Alter größer als der Aktualisierungszeitraum ist, die Empfangseinheit (150) Daten von außerhalb des Fahrzeugs und der Navigationseinrichtung (100) empfängt, und, wenn das Alter kleiner als der Aktualisierungszeitraum oder gleich dem Aktualisierungszeitraum ist, die Empfangseinheit (150) keine Daten von außerhalb des Fahrzeugs und der Navigationseinrichtung (100) empfängt.

9. Verfahren gemäß einem der vorhergehenden Ansprüche,
bei dem, wenn innerhalb eines vorgegebenen Inbetriebnahmezeitintervalls nach dem Aktivieren der Empfangseinheit (150) das Fahrzeug nicht in Betrieb genommen wird und die Navigationseinrichtung (100) nicht bedient wird, die empfangenen Daten gespeichert werden, gestartete Datendienste beendet werden und aktivierte Funktionsmodule deaktiviert werden.

10. Navigationseinrichtung (100), welche mit einem Fahrzeug verbunden ist und folgende Bestandteile aufweist:
- einen Lichtsensor (190), der zum Detektieren eines Helligkeitsanstiegs in der Umgebung des Fahrzeugs eingerichtet ist,
- eine Empfangseinheit (150), die zum Empfangen von Daten von außerhalb des Fahrzeugs und der Navigationseinrichtung (100) eingerichtet ist,
- eine Recheneinheit (110), die zum Vergleichen des detektierten Helligkeitsanstiegs mit einem vorgegebenen Helligkeitsanstieg und zum Aktivieren der Empfangseinheit (150), so dass die Empfangseinheit (150) Daten von außerhalb des Fahrzeugs und der Navigationseinrichtung (100) empfängt, wenn der detektierte Helligkeitsanstieg den vorgegebenen Helligkeitsanstieg überschreitet, eingerichtet ist, und
- eine Speichereinheit (112), die zum Speichern der Daten eingerichtet ist.

## Claims

1. Method to operate a navigation device (100) comprising a light sensor (190), a receiving unit (150), a storage unit (112) and a computing unit (110) attached to a vehicle with the following steps:
- detecting a brightness increase in the surrounding of the vehicle using the light sensor (190);
- comparing the detected brightness increase with a prescribed brightness increase using the computing unit (110), and, if the detected brightness increase exceeds the prescribed brightness increase,
- activating the receiving unit (150) using the computing unit (110), so that the receiving unit (150) receives data from outside the vehicle and the navigation device (100); and
- storing the data in the storage unit (112).

2. Method according to claim 1,
wherein a light intensity value is determined, the light intensity value is compared with a prescribed light intensity threshold value, the receiving unit (150) is activated when the light intensity value exceeds the light intensity threshold value and the receiving unit (150) is not activated when the light intensity value does not exceed the light intensity threshold value.

3. Method according to one of the claims 1 and 2,
wherein the brightness increase is formed as a difference between a first light intensity value, which is determined at a first time of measurement, and a reference light intensity value, which is determined at a reference time of measurement, whereby the reference time of measurement is set chronologically before the first time of measurement.

4. Method according to one of the proceeding claims,
wherein on activating the receiving unit (150) besides the receiving unit (150) a further function module of the navigation device (100) or of the vehicle is activated.

5. Method according to claim 4,
wherein activating of the further function module comprises the initialisation of a data service.

6. Method according to claim 5,
wherein data services are started in a certain sequence, which is determined depending on the duration of the loading each of the data services to start, the resource consumption each of the data services to start and/or an expected data transmission period each of the data services to start using the computing unit (110).

7. Method according to one of the proceeding claims,
wherein on storing the data in the storage unit (112) the data are assigned with a timestamp.

8. Method according to one of the proceeding claims,
wherein the storage unit (112) contains data assigned with a timestamp, whereby using the timestamp an age of the data stored in the storage unit (112) is determined, the age is compared with a prescribed update period and, if the age is greater than the update period, the receiving unit (150) receives data from outside the vehicle and the navigation device (100) and, if the age is less than the update period or equal to the update period, the receiving unit (150) does not receive data from outside the vehicle and the navigation device (100).

9. Method according to one of the proceeding claims,
wherein, if within a prescribed initial operation time interval after activating the receiving unit (150) the vehicle is not put into operation and the navigation device (100) is not operated, the received data are stored, started data services are terminated and activated function modules are deactivated.

10. Navigation device (100) attached to a vehicle comprising the following components:
- a light sensor (190), configured to detect a brightness increase in the surrounding of the vehicle,
- a receiving unit (150), configured to receive data from outside the vehicle and the navigation device (100),
- a computing unit (110), configured to compare the detected brightness increase with a prescribed brightness increase and to activate the receiving unit (150), so that the receiving unit (150) receives data from outside the vehicle and the navigation device (100), if the detected brightness increase exceeds the prescribed brightness increase, and
- a storage unit (112), configured to store the data.

## Revendications

1. Procédé permettant d'exploiter un dispositif de navigation (100) relié à un véhicule, dispositif qui comporte un capteur de lumière (190), une unité réceptrice (150), une unité mémoire (112) et une unité de calcul (110), le procédé étant constitué des étapes suivantes :
• détection de l'augmentation de la luminosité de l'environnement du véhicule avec un capteur de lumière (190) ;
• comparaison de l'augmentation détectée de la luminosité et d'une augmentation définie de la luminosité avec l'unité de calcul (110) ; et, si l'augmentation détectée de la luminosité dépasse l'augmentation définie de la luminosité,
• activation de l'unité réceptrice (150) avec l'unité de calcul (110) de sorte que l'unité réceptrice (150) reçoive des données provenant de l'extérieur du véhicule et du dispositif de navigation (100) ; et
• enregistrement des données dans l'unité mémoire (112).

2. Procédé selon la revendication 1,
**caractérisé en ce qu'**une valeur d'intensité lumineuse est déterminée, que la valeur d'intensité lumineuse est comparée à un seuil d'intensité lumineuse défini, que l'unité réceptrice (150) est activée si la valeur d'intensité lumineuse est supérieure au seuil d'intensité lumineuse, et que l'unité réceptrice (150) n'est pas activée si la valeur d'intensité lumineuse ne dépasse pas le seuil d'intensité lumineuse.

3. Procédé selon l'une des revendications 1 et 2,
caractérisé que ce que l'augmentation de la luminosité est obtenue par le calcul de la différence entre une première valeur d'intensité lumineuse, qui est déterminée à un premier instant de mesure, et une valeur d'intensité lumineuse de référence, qui a été déterminée à un instant de mesure de référence, l'instant de mesure de référence étant antérieur au premier instant de mesure.

4. Procédé selon l'une des revendications précédentes,
**caractérisé en ce que**, lors de l'activation de l'unité réceptrice (150), un module de fonction supplémentaire du dispositif de navigation (100) ou du véhicule est activé en plus de l'unité réceptrice (150).

5. Procédé selon la revendication 4,
**caractérisé en ce que** l'activation du module de fonction supplémentaire inclut l'initialisation d'un service d'accès aux données.

6. Procédé selon la revendication 5,
**caractérisé en ce que** des services d'accès aux données démarrent dans un certain ordre défini par l'unité de calcul (110) en fonction de la durée du chargement de chaque service d'accès aux données devant démarrer, des ressources consommées par chaque service d'accès aux données devant démarrer et/ou de la durée de transfert des données prévue de chaque service d'accès aux données devant démarrer.

7. Procédé selon l'une des revendications précédentes,
**caractérisé en ce que**, lors de l'enregistrement des données dans l'unité mémoire (112), les données sont horodatées.

8. Procédé selon l'une des revendications précédentes,
**caractérisé en ce que** l'unité mémoire (112) contient des données horodatées, que l'horodatage est utilisé pour déterminer l'âge des données enregistrées dans l'unité mémoire (112), que l'âge est comparé à un intervalle de mise à jour défini, que, si l'âge est supérieur à l'intervalle de mise à jour, l'unité réceptrice (150) reçoit des données provenant de l'extérieur du véhicule et du dispositif de navigation (100) et que, si l'âge est inférieur ou égal à l'intervalle de mise à jour, l'unité réceptrice (150) ne reçoit pas de données provenant de l'extérieur du véhicule et du dispositif de navigation (100).

9. Procédé selon l'une des revendications précédentes,
**caractérisé en ce que**, si, en l'espace d'un intervalle de mise en service défini après l'activation de l'unité réceptrice (150), le véhicule n'est pas mis en service et le dispositif de navigation (100) n'est pas utilisé, les données reçues sont enregistrées, les services d'accès aux données démarrés sont arrêtés et les modules de fonction activés sont désactivés.

10. Dispositif de navigation (100) relié à un véhicule et constitué les éléments suivants :
• un capteur de lumière (190) configuré pour détecter une augmentation de la luminosité de l'environnement du véhicule,
• une unité réceptrice (150) configurée pour recevoir des données provenant de l'extérieur du véhicule et du dispositif de navigation (100),
• une unité de calcul (110) configurée pour comparer l'augmentation détectée de la luminosité et une augmentation définie de la luminosité et pour activer l'unité réceptrice (150) de sorte que l'unité réceptrice (150) reçoive des données provenant de l'extérieur du véhicule et du dispositif de navigation (100) si l'augmentation détectée de la luminosité dépasse l'augmentation définie de la luminosité, et
• une unité mémoire (112) configurée pour enregistrer les données.
